# EUROPEAN PATENT SPECIFICATION

(11) **EP 2 746 574 B1**
(45) Date of publication and mention of the grant of the patent: **25.11.2020**
(21) Application number: 13196911.5
(22) Date of filing: 12.12.2013
(51) Int. Cl.: F03D 1/06, B23P 11/00

(54) **Joints for connecting blade segments of a wind turbine rotor blade**
Verbindungen zum Verbinden von Schaufelsegmenten einer Windturbinenrotorschaufel
Joints pour connecter des segments de lame d'une pale de rotor de turbine éolienne

(30) Priority: 21.12.2012 US 201213723361
(43) Date of publication of application: 25.06.2014
(73) Proprietor: General Electric Company, Schenectady, NY 12345 (US)
(72) Inventor: Nanukuttan, Biju, 560066 Bangalore (IN); Samudrala, Srikanth, 560066 Bangalore (IN); Akhtar, Afroz, 560066 Bangalore (IN); Srikanta, Santhosha Yelwal, 560066 Bangalore (IN); Seeley, Charles Erklin, Niskayuna, NY 12309 (US); Hynum, Daniel Alan, Greenville, SC 29615 (US); Bonala, Srinath, 560066 Bangalore (IN)
(74) Representative: ZBM Patents - Zea, Barlocci & Markvardsen

(56) References cited:
- WO-A1-2012/156547
- CN-A- 102 734 084
- US-A1- 2010 143 148

## Description

The subject matter disclosed herein relates generally to wind turbine rotor blades and, more specifically, to joints for connecting blade segments of wind turbine rotor blades.

Wind power is considered one of the cleanest, most environmentally friendly energy sources presently available, and wind turbines have gained increased attention in this regard. A modern wind turbine typically includes a tower, generator, gearbox, nacelle, and one or more rotor blades. The rotor blades capture kinetic energy of wind using known foil principles. The rotor blades transmit the kinetic energy in the form of rotational energy so as to turn a shaft coupling the rotor blades to a gearbox, or if a gearbox is not used, directly to the generator. The generator then converts the mechanical energy to electrical energy that may be deployed to a utility grid.

The size, shape, and weight of rotor blades are factors that contribute to energy efficiencies of wind turbines. An increase in rotor blade size increases the energy production of a wind turbine, while a decrease in weight also furthers the efficiency of a wind turbine. Furthermore, as rotor blade sizes grow, extra attention needs to be given to the structural integrity of the rotor blades. Presently, large commercial wind turbines in existence and in development are capable of generating from about 1.5 to about 12.5 megawatts of power. These larger wind turbines may have rotor blade assemblies larger than 90 meters in diameter. Additionally, advances in rotor blade shape encourage the manufacture of a forward swept-shaped rotor blade having a general arcuate contour from the root to the tip of the blade, providing improved aerodynamics. Accordingly, efforts to increase rotor blade size, decrease rotor blade weight, and increase rotor blade strength, while also improving rotor blade aerodynamics, aid in the continuing growth of wind turbine technology and the adoption of wind energy as an alternative energy source.

As the size of wind turbines increases, particularly the size of the rotor blades, so do the respective costs of manufacturing, transporting, and assembly of the wind turbines. The economic benefits of increased wind turbine sizes must be weighed against these factors. For example, the costs of pre-forming, transporting, and erecting a wind turbine having rotor blades in the range of 90 meters may significantly impact the economic advantage of a larger wind turbine.

One known strategy for reducing the costs of pre-forming, transporting, and erecting wind turbines having rotor blades of increasing sizes is to manufacture the rotor blades in blade segments. See, for example, US 2010/143148. The blade segments may be assembled to form the rotor blade after, for example, the individual blade segments are transported to an erection location. However, known devices and apparatus for connecting the blade segments together may have a variety of disadvantages. For example, the use of standardized connection pieces (e.g., uniformly sized bolts or the like) may utilize unnecessary material and compromise the structure of the rotor blade by removing composite material to accommodate oversized bolts. Additionally, the application of, for example, a bonding material to known devices may be difficult. For example, known devices may cause difficulties in observing and inspecting the injection or infusion of bonding material between adjacent blade segments. Further, known connection devices generally do not allow for disassembly after the rotor blade has been formed, thus preventing the removal of individual blade segments for inspection, maintenance, replacement, or upgrading.

Accordingly, alternative joints for connecting blades segments of wind turbine rotor blades would be welcome in the art.

Hence the present invention, as defined by the appended claims, is provided.

Various features provided by the embodiments discussed herein will be more fully understood in view of the following detailed description, in conjunction with the drawings.

The embodiments set forth in the drawings are illustrative and exemplary in nature and not intended to limit the inventions defined by the claims. The following detailed description of the illustrative embodiments can be understood when read in conjunction with the following drawings, where like structure is indicated with like reference numerals and in which:
FIG. 1 is an exemplary wind turbine according to one or more embodiments shown or described herein;
FIG. 2 is an exemplary rotor blade for a wind turbine according to one or more embodiments shown or described herein;
FIG. 3 is a cross sectional view of a blade segment at a joint according to one or more embodiments shown or described herein;
FIG. 4 is a schematic illustration of bolt orientations in a joint according to one or more embodiments shown or described herein;
FIG. 5 is a schematic illustration of a joint according to one or more embodiments shown or described herein;
FIG. 6 is a schematic illustration of another joint according to one or more embodiments shown or described herein;
FIG. 7 is a top view of a threaded insert according to one or more embodiments shown or described herein; and
FIG. 8 is a perspective view of a threaded insert according to one or more embodiments shown or described herein.

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

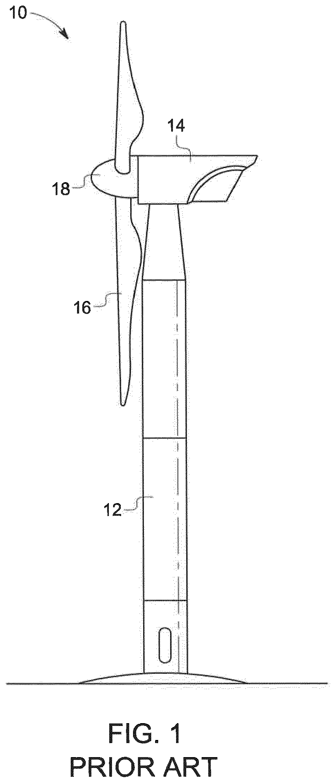

FIG. 1 illustrates a wind turbine 10 of conventional construction. The wind turbine 10 includes a tower 12 with a nacelle 14 mounted thereon. A plurality of rotor blades 16 are mounted to a rotor hub 18, which is in turn connected to a main flange that turns a main rotor shaft, as discussed below. The wind turbine power generation and control components are housed within the nacelle 14. The view of FIG. 1 is provided for illustrative purposes only to place the present invention in an exemplary field of use. It should be appreciated that the invention is not limited to any particular type of wind turbine configuration.

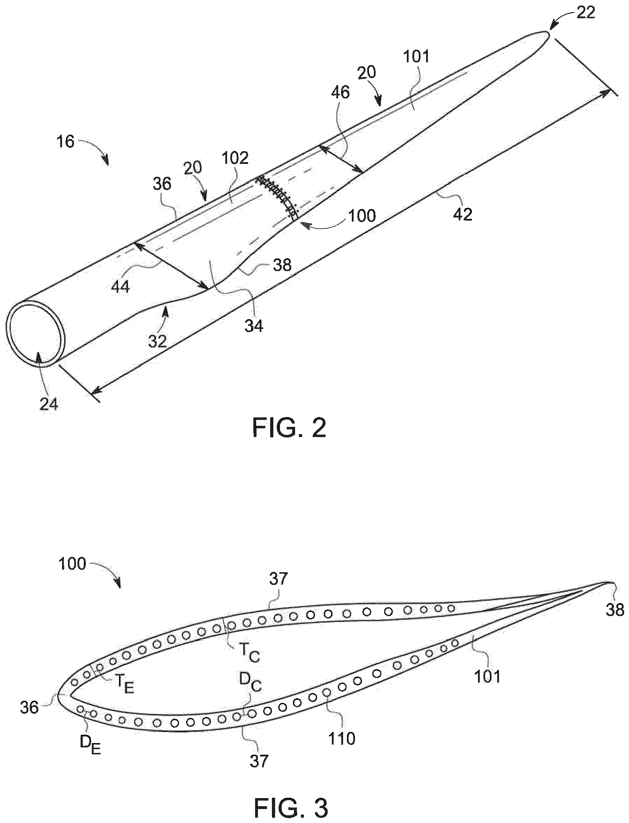

Referring to FIG. 2, one embodiment of a rotor blade 16 in accordance with the present disclosure is shown. The rotor blade 16 may include a plurality of individual blade segments 20 aligned in an end-to-end order from a blade tip 22 to a blade root 24. Each of the individual blade segments 20 may be uniquely configured so that the plurality of blade segments 20 define a complete rotor blade 16 having a designed aerodynamic profile, length, and other desired characteristics. For example, each of the blade segments 20 may have an aerodynamic contour that corresponds to the aerodynamic contour of adjacent blade segments 20. Thus, the aerodynamic contours of the blade segments 20 may form a continuous aerodynamic contour of the rotor blade 16.

In general, the rotor blade 16, and thus each blade segment 20, may include a pressure side 32 and a suction side 34 extending between a leading edge 36 and a trailing edge 38. Additionally, the rotor blade 16 may have a span 42 and a chord 44. The chord 44 may change throughout the span 42 of the rotor blade 16. Thus, a local chord 46 may be defined at any span-wise location on the rotor blade 16 or any blade segment 20 thereof.

The rotor blade 16 may, in exemplary embodiments, be curved. Curving of the rotor blade 16 may entail bending the rotor blade 16 in a generally flapwise direction and/or in a generally edgewise direction. The flapwise direction is a direction substantially perpendicular to a transverse axis through a cross-section of the widest side of the rotor blade 16. Alternatively, the flapwise direction may be construed as the direction (or the opposite direction) in which the aerodynamic lift acts on the rotor blade 16. The edgewise direction is perpendicular to the flapwise direction. Flapwise curvature of the rotor blade 16 is also known as pre-bend, while edgewise curvature is also known as sweep. Thus, a curved rotor blade 16 may be pre-bent and/or swept. Curving may enable the rotor blade 16 to better withstand flapwise and edgewise loads during operation of the wind turbine 10, and may further provide clearance for the rotor blade 16 from the tower 12 during operation of the wind turbine 10.

Still referring to FIG. 2, the rotor blade 16 further comprises a joint 100. The joint 100 connects a first blade segment 101 to a second blade segment 102 at some cross section along the length of the span 42. It should be appreciated that the first blade segment 101 and the second blade segment 102 may be any suitable adjacent blade segments 20. For example, in some embodiments, such as that illustrated in FIG. 2, the first blade segment 101 may extend from blade tip 22 and the second blade segment 102 may extend from blade root 24. In other embodiments, first blade segment 101 may extend from blade tip 22 and second blade segment 102 may be an intermediate blade segment 20, or first blade segment 101 may be an intermediate blade segment 20 and second blade segment 102 may extend from blade root 24, or both first blade segment 101 and second blade segment 102 may be intermediate blade segments 20.

Joints 100 according to the present disclosure may allow for more efficient and on-site connection of adjacent blade segments 20. For example, a joint 100 may allow for access to and connection of blade segments 20 from external to the joint 100 and blade segments 20. Additionally, joint 100 can utilize mechanical fasteners for connection to at least one of the adjacent blade segments 20, thus allowing for easier connection and inspection thereof. Such joints 100 may further allow for disassembly of the various adjacent blade segments 20 after the rotor blade 16 has been formed, thus allowing for the removal of individual blade segments 20 for inspection, maintenance, replacement and/or upgrading.

As best illustrated in FIGS. 2-6, the joint 100 comprises a center area 37 between the leading edge 36 and the trailing edge 38 and comprises a plurality of bolts 120 connecting the first blade segment 101 to the second blade segment 102. As used herein, "bolts" refer to any rigid structure that can secure to both the first blade segment 101 and the second blade segment 102 and support the connected structure when the rotor blade 16 is used in operation. For example, in some embodiments, the bolts 120 can comprise a first end comprising a head (such as one that can be rotated via a wrench, pliers, socket or the like) and a second end comprising threads. In some embodiments, the bolts 120 can comprise threads on both ends. In even some embodiments, the bolts 120 can comprise a relatively smooth surface or tapered surface. Likewise, the bolts 120 can comprise any material possessing the requisite characteristics to support the joint 100 such as one or more metals, alloys or other suitable materials.

The bolts 120 utilized in the joint 100 comprise non-uniform sizes across the joint. The "size" of the bolt can refer to any dimensional measurement (i.e., size parameter) such as its length, cross sectional area, weight or other dimension that would have an effect on its support capabilities in the joint. Furthermore, the size of the bolt 120 utilized in the joint 100 can depend on its location within the joint 100 with respect to the leading edge 36, center area 37 and trailing edge 38. Particularly, larger and stronger bolts 120 may be disposed more proximate the center area 37 since the center area 37 may sustain relatively larger forces during the operation of the rotor blade 16. Likewise, smaller bolts 120 may be disposed more proximate the ledge edge 37 and trailing edge 38 since those locations sustain relatively smaller forces during operation of the rotor blade 16.

For example, referring to FIGS. 3-6, in some embodiments, the plurality of bolts 120 can include a first bolt 121, a second bolt 122, and a third bolt 123. The first bolt 121, second bolt 122 and third bolt 123 can comprise different lengths such that at least one of the three bolts 121, 122 and 123 are longer than the other two. In some embodiments, all three bolts 121, 122 and 123 may have different lengths. In other embodiments, two of the bolts (e.g., the first bolt 121 and the second bolt 122) may each have a first length and the other bolt (e.g., the third bolt 123) may have a second length different than the first length.

The length of each particular bolt 120 can be selected based on its location within the joint 100. For example, if the first bolt 121 is more proximate the center area 37 than the second bolt 122, than the first bolt 121 may be longer than the second bolt 122.

Likewise, if the third bolt 123 is even farther than the center area 37 than the second bolt 122 (such that it is closer to the leading edge 36 or trailing edge 38), than the third bolt 123 may be shorter than the second bolt 122. The tapering lengths of the first bolt 121, second bolt 122 and third bolt 123 can provide the necessary amount of strength for that specific location on the joint 100 without using excess material where not required (e.g., at the leading edge 36 and/or trailing edge 38).

Similarly, the first bolt 121, second bolt 122 and third bolt 123 can comprise different cross sectional areas (e.g., thicknesses) such that at least one of the three bolts 121, 122 and 123 has a larger cross sectional area than the other two. In some embodiments, all three bolts 121, 122 and 123 may have different cross sectional areas. In other embodiments, two of the bolts (e.g., the first bolt 121 and the second bolt 122) may each have a first cross sectional area and the other bolt (e.g., the third bolt 123) may have a second cross sectional area different than the first cross sectional area.

The cross sectional area of each particular bolt 120 can be selected based on its location within the joint 100. For example, if the first bolt 121 is more proximate the center area 37 than the second bolt 122, than the first bolt 121 may have a larger cross sectional area than the second bolt 122. Likewise, if the third bolt 123 is even farther than the center area 37 than the second bolt 122 (such that it is closer to the leading edge 36 or trailing edge 38), than the third bolt 123 may have a smaller cross sectional area than the second bolt 122. The tapering sizes of the cross sectional areas of the first bolt 121, second bolt 122 and third bolt 123 can provide the necessary amount of strength for that specific location on the joint 100 without using excess material where not required (e.g., at the leading edge 36 and/or trailing edge 38).

Still referring to FIGS. 3-6, the bolts 120 utilized in the joint 100 are also separated by different distances. For example, the first bolt 121 and the second bolt 122 can be separated by a first distance and the second bolt 122 and the third bolt 123 can be separated by a second distance. The first distance may either be longer or shorter than the second distance and, similar to above, can depend on the specific locations of the first bolt 121, second bolt 122, and third bolt 123 with respect to the leading edge 36, center area 37 and trailing edge 38.

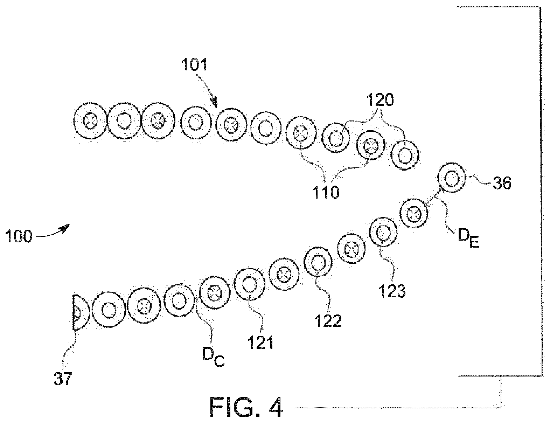

In some embodiments, the distances separating the bolts 120 may be shorter towards the center area 37 of the joint 100. Specifically, as best illustrated n FIGS. 3 and 4, bolts 120 located towards the center area 37 may be separated from one another by a center separating distance D_{C}. Likewise, bolts 120 located towards the leading edge 36 or trailing edge 38 may be separated by an edge separating distance D_{E}. In such embodiments, the center separating distance D_{C} can be less than the edge separating distance D_{E} such that the bolts 120 are close together towards the center area 37 than they are towards the leading edge 36 or trailing edge 38. The closer packed bolts 120 towards the center area 37 can thereby provide greater structural support to the joint 100 where needed, while material resources and costs can be preserved towards the lower stress areas by the leading edge 36 and trailing edge 38.

Referring now to FIGS. 2-8, the bolts 120 can be connected to the first blade segment 101 and the second blade segment 102 in a variety of ways. For example, as illustrated in FIGS. 2-4, one or both blade segments 20 may contain bore holes 110 that can receive and secure at least a portion of the bolt 120. In some embodiments, the bore holes 110 can be drilled into the blade segments 20. In some embodiments, the bore holes 110 may be worked into the blade segments 20 during manufacturing (such as by leaving a void or open receptacle in the joint when filling with composite material). In other embodiments, the bolts 120 may be secured to one of the blade segments 20 during manufacturing. For example, a portion of the bolts 120 may be disposed in one of the blade segments 20 when the blade segments 20 is filled with a composite material or the like. The bolts 120 may thereby be secured to one of the blade segment without the need for a bore hole 110.

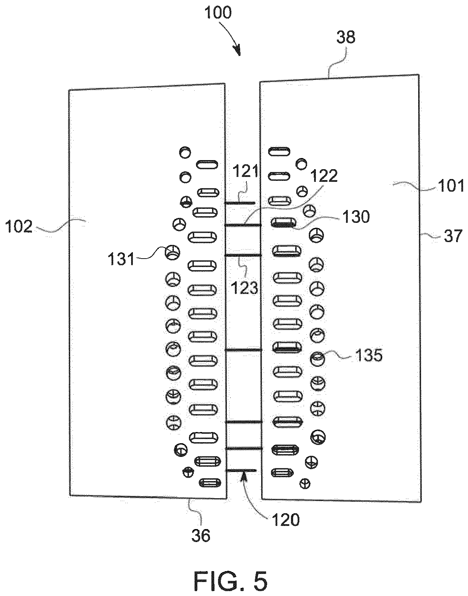

Referring now to FIG. 5, in some embodiments one end of a bolt 120 can be secured to the first blade segment 101 via a barrel nut 132 while the other end is secured to the second blade segment 102 via a releasable fastener 130 (e.g., nut, clamp or the like). In such embodiments, one or more access ports 135 can be disposed about both the first blade segment 101 and the second blade segment 102 so that the necessary tools can access the barrel nut 132 and/or releasable fastener 130 for tightening.

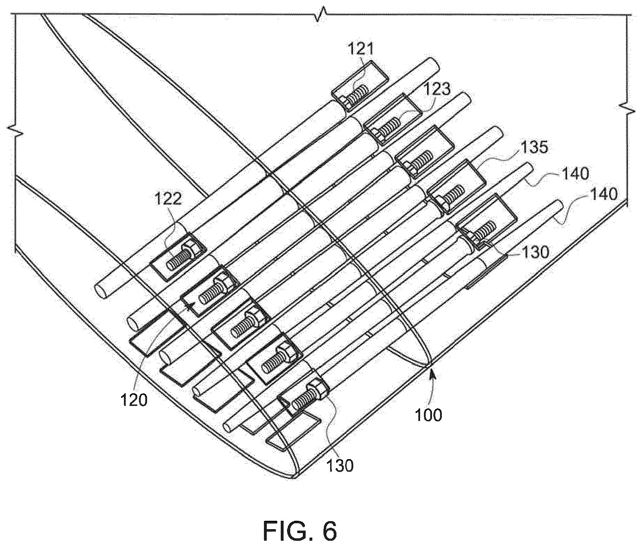

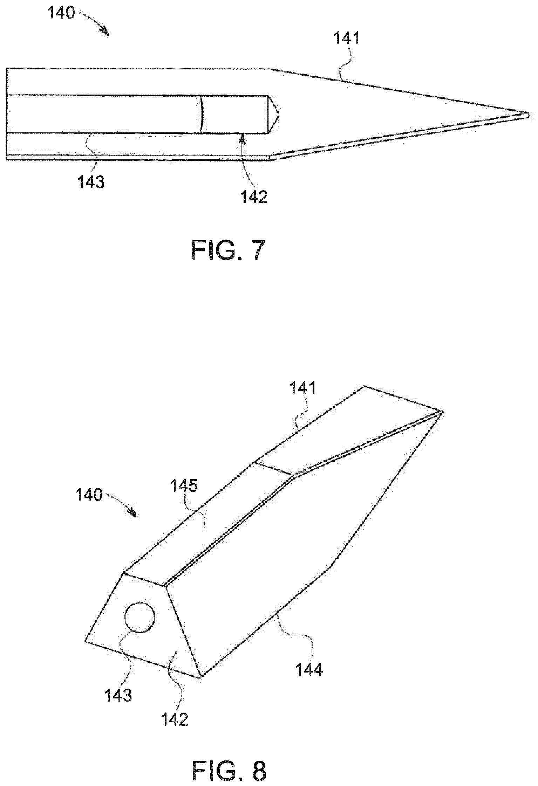

Referring now to FIGS. 6-8, on other embodiments, one of the bolts 120 can be secured to the first blade segment 101 or the second blade segment 102 via a threaded insert 140. The threaded inserts 140 can generally comprise a body 141 having a hollowing portion 142 with a threaded section 143 therein for receiving a threaded bolt 120. The threaded inserts 140 can be originally manufactured into the first blade segment 101 or second blade segment 102, or can be installed during retrofitting of the first blade segment 101 or second blade segment 102. Moreover, the threaded inserts 140 can have a variety of shapes and configurations. For example, as illustrated in FIGS. 7-8, in some embodiments, the threaded inserts 140 can comprise an oversized base 144 and a top 145. The oversized base 144 has greater surface area than the top 145 and can allow for greater distribution of the force between the threaded insert 140 and the rotor blade 16.

The threaded inserts 140 can also vary in size and distance to correspond with their respective bolts 120. For example, threaded inserts 140 more proximate the center area 37 may be longer to accommodate longer bolts 120 while threaded inserts 140 more proximate the leading edge 36 or trailing edge 38 may be shorter to accommodate shorter bolts 120 without waiting unnecessary material. Likewise, threaded inserts 140 more proximate the center area 37 may have larger cross sectional areas to accommodate bolts 120 with larger cross sectional areas and threaded inserts 140 more proximate the leading edge 36 or trailing edge 38 may have smaller cross sectional areas to accommodate bolts 120 with smaller cross section areas. In even some embodiments, the threaded inserts 140 may be separated from each other by shorter distances towards the center area 37 to mirror bolts 120 that are similarly separated from each other by short distances towards the center area 37. While exemplary variations of threaded inserts 140 have been presented herein, it should be appreciated that additional or alternative embodiments may also be realized to receive the bolts 120 connected between the first blade segment 101 and the second blade segment 102.

According to the invention, as illustrated in FIGS. 4-6, the bolts 120 are connected between the first blade segment 101 and the second blade segment 102 in alternating directions. As used herein, alternating directions refers to a first bolt that is connected to the first blade segment 101 via a first connection type and to the second blade segment 102 via a second connection type as well as a second bolt that is connected to the first blade segment 101 via the second connection type and to the second blade segment 102 via the first connection type. For example, referring to FIG. 4, the first blade segment 101 at the joint 100 can comprise an alternating repetition of empty bore holes 110 (that are used to receive bolts 120 secured to the second blade segment 102) and bolts 120. The second blade segment 102 can then comprise a complimentary alternating set of bore holes 110 and bolts 120 so that the first blade segment 101 and the second blade segment 102 can come together to form the joint 100. In some embodiments, every adjacent bolt 120 alternates directions. In other embodiments, bolts 120 may alternate directions in groups such that two or more adjacent bolts face a first direction while the next group of two or more bolts faces a second direction.

By having a joint 100 with bolts 120 alternating directions, the bolts may potentially be disposed closer to one another. Specifically, when one of the connection types is wider (or otherwise takes up more space) than the second connection type, an alternating orientation can allow for closer spacing by alternating the sides at which the wider connecting type is disposed. The alternating directions of bolts 120 can thereby provide greater support and/or greater distribution of the support use to connection the joint 100.

The joint 100 itself may comprise any material and construction that accompanies a rotor blade 16 for a wind turbine 10. For example, in some embodiments the joint 100 can comprise one or more composite materials. In such embodiments, the bolts 120, bore holes 110, threaded inserts 140 and/or any other connection accessory may be manufactured into the composite material during manufacturing, or may be inserted into the composite material post manufacturing during a retrofit operation. In some embodiments, the joint area 100 can comprise a composite material disposed between two sections of spar caps. In other embodiments, the joint 100 may comprise any other material and construction that allows for multiple blade segments 20 for form the rotor blade 16. The composite material (or other material comprising the joint 100) can also have increasing thickness towards the center area 37. For example, as illustrated in FIG. 3, a center thickness T_{C} proximate the center area 37 may be thicker than an edge thickness T_{E} towards the leading edge 36 or trailing edge 38. Such embodiments can allow for the larger bolts towards the center area 36 and provide greater structural support where needed. However, it should be appreciated that other relative thickness configurations may also be realized such as the center thickness T_{C} being less thick than the edge thickness

In some embodiments, a method for joining multiple blade segments 20 may be achieved using the joints 100 disclosed herein. For example, the method can comprise connecting proximal ends of a plurality of bolts 120 to a first blade segment 101 and connecting distal ends of the plurality of bolts 120 to a second blade segment 102. The connections can be made in any order such as connecting all the bolts 120 to the first blade segment 101 prior to connecting the bolts 120 to the second blades segment, connecting all the bolts 120 to the second blade segment 102 prior to connecting the bolts 120 to the first blade segment 101, or alternating connecting the bolts 120 between the first blade segment 101 and the second blade segment 102. Moreover, the connection may be achieved through any suitable means such as through barrel nuts, threaded inserts, or any other operable structure such as those discussed above.

The first blade segment 101 and the second blade segment 102 form a center area 37 between a leading edge 36 and a trailing edge 38 at the joint 100. As also discussed above, a size parameter of the plurality of bolts 120 changes towards the center area 37, and the plurality of bolts 120 are separated from each other by different distances towards the center area 37. The size parameter can include the length, cross sectional area, weight or other dimension that would have an effect on the support capabilities of the plurality of bolts 120 in the joint. In some embodiments, the size parameter increases towards the center area 37 so that larger, strong bolts 120 are disposed where the joint 100 may experience greater stress. Moreover, in some embodiments, the plurality of bolts 120 are separated from each other by shorter distances towards the center area 37 so that bolts 120 are closer together where the joint 100 may experience greater stress.

It should now be appreciated that that joints 100 can comprise a plurality of bolts that vary in size, spacing and/or direction based on their respective location about the joint. By varying the size, spacing and/or direction, the bolts can be tailored to provide the requisite amount of support specific to that location without using unnecessary material and manufacturing costs that would occur using uniform bolts and/or uniform spacing. The joints can thereby provide rotor blades with increased sizes while also increasing the securing efficiency of the bolts utilized therein.

While the invention has been described in detail in connection with only a limited number of embodiments, it should be readily understood that the invention is not limited to such disclosed embodiments. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A joint (100) for connecting a first blade segment (101) to a second blade segment (102) of a wind turbine rotor blade (16), the joint comprising:
a first bolt (120) comprising a first proximal end connected to the first blade segment (101) and a first distal end connected to the second blade segment (102);
a second bolt (120) comprising a second proximal end connected to the first blade segment (101) and a second distal end connected to the second blade segment (102); and
a third bolt (120) comprising a third proximal end connected to the first blade segment (101) and a third distal end connected to the second blade segment (102), wherein at least two of the first bolt (120), the second bolt (120) and the third bolt (120) differ in size, and wherein a first distance between the first bolt (120) and the second bolt (120) is different than a second distance between the second bolt (120) and the third bolt (120); **characterized in that**:
the bolts (120) are connected between the first blade segment (101) and the second blade segment (102) in alternating directions.

2. The joint (100) of claim 1, wherein the first bolt (120), the second bolt (120) and the third bolt (120) have different lengths.

3. The joint (100) of any preceding claim, wherein the joint comprises a center area (37) between a leading edge (36) and a trailing edge (38), wherein the first bolt (120) is more proximate the center area (37) than the second bolt (120), and wherein the first bolt (120) is longer than the second bolt (120).

4. The joint (100) of claim 3, wherein the second bolt (120) is more proximate the center area (37) than the third bolt (120), and wherein the second bolt (120) is longer than the third bolt (120).

5. The joint (100) of any preceding claim, wherein the first bolt (120), the second bolt (120) and the third bolt (120) have different cross sectional areas.

6. The joint (100) of any preceding claim, wherein the joint comprises a center area (37) between a leading edge (36) and a trailing edge (38), wherein the first bolt is more proximate the center area than the second bolt, and wherein the first bolt has a larger cross sectional area than the second bolt.

7. The joint (100) of claim 6, wherein the second bolt (120) is more proximate the center area (37) than the third bolt, and wherein the second bolt has a larger cross sectional area than the third bolt.

8. The joint (100) of any preceding claim, wherein the first bolt (120), the second bolt (120) and the third bolt (120) are connected between the first blade segment (101) and the second blade segment (102) in alternating directions.

9. The joint (100) of any preceding claim, wherein the first blade segment (101) comprises a first threaded insert (140) for receiving the first proximal end of the first bolt (120).

10. The joint (100) of any preceding claim, wherein the second blade segment (102) comprises a second threaded insert (140) for receiving the second distal end of the second bolt (120).

11. The joint (100) of any preceding claim, wherein the joint comprises a center area (37) between a leading edge (36) and a trailing edge (38), wherein the first blade segment and the second blade segment comprise a composite material at the joint, and wherein the composite material is thicker at the center area than at the leading edge and the trailing edge.

12. The joint (100) of any preceding claim, wherein the joint comprises a center area (37) between a leading edge (36) and a trailing edge (38), wherein the first bolt is more proximate the center area (37) than the third bolt, wherein the second bolt is between the first bolt and the third bolt, and wherein the first distance between the first bolt and the second bolt is less than the second distance between the second bolt and the third bolt.

13. The joint (100) of any preceding claim further comprising a threaded insert (140) and/or one or more access ports (135) disposed about the first and/or second blade segments (101,102).

14. A method of connecting a first blade segment (101) to a second blade segment (102) of a wind turbine rotor blade (16) at a joint (100), the method comprising:
connecting proximal ends of a plurality of bolts (120) to a first blade segment (101); and
connecting distal ends of the plurality of bolts (120) to a second blade segment (102);
wherein, the first blade segment (101) and the second blade segment (102) form a center area (37) between a leading edge (36) and a trailing edge (38) at the joint (100), wherein a size parameter of the plurality of bolts (120) changes towards the center area (37), and wherein the plurality of bolts (120) are separated from each other by different distances towards the center area (37), **characterized in that**:
the bolts (120) are connected between the first blade segment (101) and the second blade segment (102) in alternating directions.

15. The method of claim 14, wherein the size parameter increases towards the center area (37), and wherein the plurality of bolts (120) are separated from each other by shorter distances towards the center area (37).

## Patentansprüche

1. Eine Verbindung (100) zum Verbinden von einem ersten Blattabschnitt (101) mit einem zweiten Blattabschnitt (102) von einem Windturbinenrotorblatt (16), wobei die Verbindung folgendes umfasst:
einen ersten Bolzen (120) umfassend ein mit dem ersten Blattabschnitt (101) verbundenes erstes proximales Ende und ein mit dem zweiten Blattabschnitt (102) verbundenes erstes distales Ende;
einen zweiten Bolzen (120) umfassend ein mit dem ersten Blattabschnitt (101) verbundenes zweites proximales Ende und ein mit dem zweiten Blattabschnitt (102) verbundenes zweites distales Ende; und
einen dritten Bolzen (120) umfassend ein mit dem ersten Blattabschnitt (101) verbundenes drittes proximales Ende und ein mit dem zweiten Blattabschnitt (102) verbundenes drittes distales Ende, wobei mindestens zwei von dem ersten Bolzen (120), dem zweiten Bolzen (120) und dem dritten Bolzen (120) eine verschiedene Größe haben, und wobei eine erste Entfernung zwischen dem ersten Bolzen (120) und dem zweiten Bolzen (120) verschieden von einer zweiten Entfernung zwischen dem zweiten Bolzen (120) und dem dritten Bolzen (120) ist; **dadurch gekennzeichnet, dass**:
die Bolzen (120) zwischen dem ersten Blattabschnitt (101) und dem zweiten Blattabschnitt (102) in alternierenden Richtungen verbunden sind.

2. Die Verbindung (100) des Anspruchs 1, wobei der erste Bolzen (120), der zweite Bolzen (120) und der dritte Bolzen (120) verschiedene Längen haben.

3. Die Verbindung (100) von einem der vorhergehenden Ansprüche, wobei die Verbindung einen mittleren Bereich (37) zwischen einer Vorderkante (36) und einer Hinterkante (38) umfasst, wobei der erste Bolzen (120) näher am mittleren Bereich (37) als der zweite Bolzen (120) ist, und wobei der erste Bolzen (120) länger als der zweite Bolzen (120) ist.

4. Die Verbindung (100) des Anspruchs 3, wobei der zweite Bolzen (120) näher am mittleren Bereich (37) als der dritte Bolzen (120) ist, und wobei der zweite Bolzen (120) länger als der dritte Bolzen (120) ist.

5. Die Verbindung (100) von einem der vorhergehenden Ansprüche, wobei der erste Bolzen (120), der zweite Bolzen (120) und der dritte Bolzen (120) verschiedene Querschnittsflächen haben.

6. Die Verbindung (100) von einem der vorhergehenden Ansprüche, wobei die Verbindung einen mittleren Bereich (37) zwischen einer Vorderkante (36) und einer Hinterkante (38) umfasst, wobei der erste Bolzen näher am mittleren Bereich als der zweite Bolzen ist, und wobei der erste Bolzen eine größere Querschnittsfläche als der zweite Bolzen hat.

7. Die Verbindung (100) des Anspruchs 6, wobei der zweite Bolzen (120) näher am mittleren Bereich (37) als der dritte Bolzen ist, und wobei der zweite Bolzen eine größere Querschnittsfläche als der dritte Bolzen hat.

8. Die Verbindung (100) von einem der vorhergehenden Ansprüche, wobei der erste Bolzen (120), der zweite Bolzen (120) und der dritte Bolzen (120) zwischen dem ersten Blattabschnitt (101) und dem zweiten Blattabschnitt (102) in alternierenden Richtungen verbunden sind.

9. Die Verbindung (100) von einem der vorhergehenden Ansprüche, wobei der erste Blattabschnitt (101) einen ersten Gewindeeinsatz (140) zum Empfangen des ersten proximalen Endes des ersten Bolzens (120) umfasst.

10. Die Verbindung (100) von einem der vorhergehenden Ansprüche, wobei der zweite Blattabschnitt (102) einen zweiten Gewindeeinsatz (140) zum Empfangen des zweiten distalen Endes des zweiten Bolzens (120) umfasst.

11. Die Verbindung (100) von einem der vorhergehenden Ansprüche, wobei die Verbindung einen mittleren Bereich (37) zwischen einer Vorderkante (36) und einer Hinterkante (38) umfasst, wobei der erste Blattabschnitt und der zweite Blattabschnitt einen Verbundwerkstoff an der Verbindung umfassen, und wobei der Verbundwerkstoff dicker in dem mittleren Bereich als die Vorderkante und die Hinterkante ist.

12. Die Verbindung (100) von einem der vorhergehenden Ansprüche, wobei die Verbindung einen mittleren Bereich (37) zwischen einer Vorderkante (36) und einer Hinterkante (38) umfasst, wobei der erste Bolzen näher am mittleren Bereich (37) als der dritte Bolzen ist, wobei der zweite Bolzen zwischen dem ersten Bolzen und dem dritten Bolzen ist, und wobei die erste Entfernung zwischen dem ersten Bolzen und dem zweiten Bolzen geringer als die zweite Entfernung zwischen dem zweiten Bolzen und dem dritten Bolzen ist.

13. Die Verbindung (100) von einem der vorhergehenden Ansprüche weiterhin umfassend einen Gewindeeinsatz (140) und/oder eine oder mehrere Zugangsöffnungen (135), die um den ersten und/oder den zweiten Blattabschnitt (101,102) herum angeordnet sind.

14. Ein Verfahren zur Verbindung von einem ersten Blattabschnitt (101) mit einem zweiten Blattabschnitt (102) von einem Windturbinenrotorblatt (16) an einer Verbindung (100), wobei das Verfahren folgendes umfasst:
das Verbinden von proximalen Enden von einer Vielzahl von Bolzen (120) mit einem ersten Blattabschnitt (101); und
das Verbinden von distalen Enden von der Vielzahl von Bolzen (120) mit einem zweiten Blattabschnitt (102);
wobei der erste Blattabschnitt (101) und der zweite Blattabschnitt (102) einen mittleren Bereich (37) zwischen einer Vorderkante (36) und einer Hinterkante (38) an der Verbindung (100) bilden, wobei ein Größenparameter von der Vielzahl von Bolzen (120) in Richtung zum mittleren Bereich (37) variiert, und wobei die Vielzahl von Bolzen (120) getrennt voneinander durch verschiedene Entfernungen in Richtung zum mittleren Bereich (37) sind, **dadurch gekennzeichnet, dass**:
die Bolzen (120) zwischen dem ersten Blattabschnitt (101) und dem zweiten Blattabschnitt (102) in alternierenden Richtungen verbunden sind.

15. Das Verfahren des Anspruchs 14, wobei der Größenparameter in Richtung zum mittleren Bereich (37) größer wird, und wobei die Vielzahl von Bolzen (120) getrennt voneinander durch kürzere Richtungen in Richtung zum mittleren Bereich (37) sind.

## Revendications

1. Un joint (100) pour la connexion d'un premier segment de pale (101) à un second segment de pale (102) d'une pale de rotor d'éolienne (16), le joint comprenant :
un premier boulon (120) comprenant une première extrémité proximale reliée au premier segment de pale (101) et une première extrémité distale reliée au second segment de pale (102) ;
un second boulon (120) comprenant une seconde extrémité proximale reliée au premier segment de pale (101) et une seconde extrémité distale reliée au second segment de pale (102) ; et
un troisième boulon (120) comprenant une troisième extrémité proximale reliée au premier segment de pale (101) et une troisième extrémité distale reliée au second segment de pale (102), dans lequel au moins deux parmi le premier boulon (120), le second boulon (120) et le troisième boulon (120) ont une taille différente, et dans lequel une première distance entre le premier boulon (120) et le second boulon (120) est différente d'une seconde distance entre le second boulon (120) et le troisième boulon (120) ; **caractérisé en ce que** :
les boulons (120) sont reliés entre le premier segment de pale (101) et le second segment de pale (102) dans des sens alternés.

2. Le joint (100) de la revendication 1, dans lequel le premier boulon (120), le second boulon (120) et le troisième boulon (120) ont des longueurs différentes.

3. Le joint (100) de l'une quelconque des revendications précédentes, dans lequel le joint comprend une région centrale (37) entre un bord d'attaque (36) et un bord de fuite (38), dans lequel le premier boulon (120) est plus proche de la région centrale (37) que le second boulon (120), et dans lequel le premier boulon (120) est plus long que le second boulon (120).

4. Le joint (100) de la revendication 3, dans lequel le second boulon (120) est plus proche de la région centrale (37) que le troisième boulon (120), et dans lequel le second boulon (120) est plus long que le troisième boulon (120).

5. Le joint (100) de l'une quelconque des revendications précédentes, dans lequel le premier boulon (120), le second boulon (120) et le troisième boulon (120) ont des surfaces en section transversale différentes.

6. Le joint (100) de l'une quelconque des revendications précédentes, dans lequel le joint comprend une région centrale (37) entre un bord d'attaque (36) et un bord de fuite (38), dans lequel le premier boulon est plus proche de la région centrale que le second boulon, et dans lequel le premier boulon a une surface en section transversale plus grande que le second boulon.

7. Le joint (100) de la revendication 6, dans lequel le second boulon (120) est plus proche de la région centrale (37) que le troisième boulon, et dans lequel le second boulon a une surface en section transversale plus grande que le troisième boulon.

8. Le joint (100) de l'une quelconque des revendications précédentes, dans lequel le premier boulon (120), le second boulon (120) et le troisième boulon (120) sont reliés entre le premier segment de pale (101) et le second segment de pale (102) dans de sens alternés.

9. Le joint (100) de l'une quelconque des revendications précédentes, dans lequel le premier segment de pale (101) comprend un premier insert fileté (140) pour recevoir la première extrémité proximale du premier boulon (120).

10. Le joint (100) de l'une quelconque des revendications précédentes, dans lequel le second segment de pale (102) comprend un second insert fileté (140) pour recevoir la seconde extrémité proximale du second boulon (120).

11. Le joint (100) de l'une quelconque des revendications précédentes, dans lequel le joint comprend une région centrale (37) entre un bord d'attaque (36) et un bord de fuite (38), dans lequel le premier segment de pale et le second segment de pale comprennent un matériau composite dans le joint, et dans lequel le matériau composite est plus épais dans la région centrale que dans le bord d'attaque et le bord de fuite.

12. Le joint (100) de l'une quelconque des revendications précédentes, dans lequel le joint comprend une région centrale (37) entre un bord d'attaque (36) et un bord de fuite (38), dans lequel le premier boulon est plus proche de la région centrale (37) que le troisième boulon, dans lequel le second boulon est situé entre le premier boulon et le troisième boulon, et dans lequel la première distance entre le premier boulon et le second boulon est inférieure à la seconde distance entre le second boulon et le troisième boulon.

13. Le joint (100) de l'une quelconque des revendications précédentes comprenant en outre un insert fileté (140) et/ou une ou plusieurs ouvertures d'accès (135) situées autour des segments de pale premier et/ou second (101,102).

14. Un procédé pour la connexion d'un premier segment de pale (101) à un second segment de pale (102) d'une pale de rotor d'éolienne (16) à un joint (100), le procédé comprenant :
relier des extrémités proximales d'une pluralité de boulons (120) à un premier segment de pale (101) ; et
relier des extrémités distales de la pluralité de boulons (120) à un second segment de pale (102) ;
dans lequel le premier segment de pale (101) et le second segment de pale (102) forment une région centrale (37) entre un bord d'attaque (36) et un bord de fuite (38) au joint (100), dans lequel un paramètre de taille de la pluralité de boulons (120) varie vers la région centrale (37), et dans lequel la pluralité de boulons (120) sont séparés les uns par rapport aux autres par des distances différentes vers la région centrale (37), **caractérisé en ce que** :
les boulons (120) sont reliés entre le premier segment de pale (101) et le second segment de pale (102) dans des sens alternés.

15. Le procédé de la revendication 14, dans lequel le paramètre de taille augmente vers la région centrale (37), et dans lequel la pluralité de boulons (120) sont séparés les uns par rapport aux autres par des distances plus courtes vers la région centrale (37).
